# EUROPÄISCHE PATENTSCHRIFT

(11) **EP 1 125 715 B1**
(45) Veröffentlichungstag und Bekanntmachung des Hinweises auf die Patenterteilung: **01.12.2004**
(21) Anmeldenummer: 00126755.8
(22) Anmeldetag: 06.12.2000
(51) Int. Cl.: B29C 51/16, B65B 3/02

(54) **Tiefziehverfahren und FFS-Maschine zum kontinuierlichen Herstellen von dekorierten Bechern**
Deep-drawing process and form-, fill-, and sealing machine for continuously producing decorated cups
Procédé d'emboutissage et machine de formage, de remplissage et de scellement pour la fabrication continue de pots décorés

(30) Priorität: 18.01.2000 DE 10001818
(43) Veröffentlichungstag der Anmeldung: 22.08.2001
(73) Patentinhaber: Hassia Verpackungsmaschinen GmbH, D-63691 Ranstadt (DE)
(72) Erfinder: Walter, Peter, 63683 Ortenberg (DE); Grusdt, Rainer, 63654 Büdingen (DE)
(74) Vertreter: Wolf, Günter, Dipl.-Ing.

(56) Entgegenhaltungen:
- EP-A- 0 727 357
- DE-A- 19 804 876
- DE-U- 7 327 513

## Beschreibung

Die Erfindung betrifft Tiefziehverfahren zum getakteten Formen, Füllen und Schließen von dekorierten Bechern einer Packstoffbahn mit einer sogenannten FFS-Maschine, wobei als Becherdekor Banderolen oder Etiketten vor dem Formen der Becher in die Formstation-Unterteile der FFS-Maschine eingebracht werden. Das Kürzel FFS steht dabei für Formen, Füllen, Schliessen.
Die Erfindung bezieht sich ferner auf FFS-Maschine zur Durchführung des Verfahrens gemäß der Oberbegriffe der abhängigen Patentansprüche 3 und 4. Nachfolgend wird der Einfachheit halber lediglich allgemein vom Dekoreinrichtungen gesprochen.

Tiefziehverfahren und sogegannte FFS-Verpackungsmaschinen der genannten Art sind bekannt und in Benutzung. Bezüglich der Ausstattung solcher FFS-Maschinen mit Dekoreinrichtungen ist bspw. auf die EP-A-0 727 357 und die EP-A-0 600 259 zu verweisen.

Moderne FFS-Verpackungsmaschinen arbeiten im Interesse hoher Durchsatzleistungen mit vergleichsweise sehr hohen Taktzahlen, und zwar in der Größenordnung von 50 Takten pro Minute, was allerdings mit einer Dekoranbringung nicht in Einklang zu bringen ist, da das Abschneiden eines Banderolenabschnittes von einem Vorratsband, die Banderolen- bzw. Etiketteneinbringung in die Tiefziehform und die Rückstellung der mit Banderolen bestückten Unterteile der Formstation in Tiefziehstellung unter der Packstoffbahn entsprechend lange Zeiten verlangen, die solche hohen Taktzahlen nicht zulassen.

Da es wünschenswert ist, derartige im Einreihenschrittakt gefahrene FFS - Maschinen bei gewünschter Dekoration ebenfalls mit solch hohen Taktzahlen fahren zu können, liegt der Erfindung die Aufgabe zugrunde, ein Verfahren und eine FFS-Maschine zu seiner Durchführung zu schaffen, mit denen trotz Dekoranbringung derartig hohe Taktzahlen gefahren werden können.

Diese Aufgabe ist, was das Verfahren betrifft, durch die in den Kennzeichen der unabhängigen Patentansprüche 1 und 2 gelöst, und bezüglich der FFS-Maschinen zur Durchführung dieser Verfahren wird auf die Kennzeichen der jeweils den Patentansprüchen 1 und 2 zugehörigen, abhängigen Patentansprüche 3 und 4 verwiesen.

Die Gliederung in zwei unabhängige Patentansprüche hat ihren Grund lediglich darin, weil die Konsistenz des Füllgutes beim Betrieb solcher Maschinen mit hohen Taktzahlen berücksichtigt werden muß, d.h., flüssiges Füllgut neigt je nach Größe der Schrittaktlänge stärker zum Überschwappen als weniger flüssiges bzw. pastöses Füllgut.

Die erfindungsgemäße Lösung bei flüssigem Füllgut beruht gewissermaßen auf dem Trick, einerseits die Packstoffbahn weiterhin mit hoher Taktzahl im Einschrittakt zu fördern, dabei aber an der Packstoffbahn jeweils zwei Reihen von Bechern auszuformen, die jedoch in zwei einzelnen Schritttakten aus der Tiefziehstation herausgefördert werden. Die damit gewonnene Taktzeit steht aber für die Einbringung der Dekor- bzw. Banderolenabschnitte in die zwei Reihen des Unterteiles der Formstation zur Verfügung einschließlich der Zeit für deren Absenkung in die Beschickungsposition zur Einbringung der Banderolenabschnitte und für die Rückstellung im bestückten Zustand von unten gegen die Packstoffbahn.
Dabei ist darauf hinzuweisen, daß die Benutzung zwei- oder auch mehrreihiger Tiefziehformen bzw. Tiefziehstationen an solchen FFS-Maschinen grundsätzlich bekannt ist, nur erfolgt hierbei der Taktabzug mit einem beide bzw. alle Reihen ausgeformter Becher erfassenden Taktabzugsschritt. Verwiesen sei hierzu bspw. auf folgende Druckschriften: DE-A-198 04 876 A1, EP-A-0 931 637 A1 und DE-A-35 38 528 A1.
Die erfindungsgemäße Lösung ist davon unabhängig, wie im Einzelnen die Einrichtungen zur Einführung von Banderolen oder Etiketten gestaltet sind und auch davon, ob die FFS-Maschine tatsächlich aseptisch betrieben wird oder nicht, obgleich mit Rücksicht auf die zu verpackenden Produkte (insbesondere fließfähige Lebens- und Genußmittel) in der Regel ein solcher aseptischer Betrieb praktiziert wird.

Bei pastöseren, also nicht zum Überschwappen neigenden Füllgut wird mit dem gleichen "Trick" verfahren, d.h., gemäß Kennzeichen des unabhängigen Patentanspruches 2. Der Unterschied zum Verfahren nach dem unabhängigen Patentanspruch 1 besteht, da ja die gefüllten Becher auch hierbei dekoriert werden sollen, im wesentlichen darin, daß hierbei wegen der seitlichen Zuordnung der Dekoreinrichtungen zur Packstoffnahn diese nur zweibahnig gefahren werden kann, was noch näher erläutert wird. Wesentlich ist hierbei außer der zweibahnig zu fahrenden Packstoffbahn, daß die Becher in jeder Bahn gleichzeitig zu viert, zu sechst oder achtfach eingeformt werden, wobei aber auch hier jeweils nur die Hälfte der ausgeformten Becher aus der Formstation herausgefahren werden, um die erforderliche Zeit für die Dekoreinbringung zu gewinnen.

Das erfindungsgemäße Verfahren und die FFS-Maschine zu seiner Durchführung werden nachfolgend anhand der zeichnerischen Darstellung von Ausführungsbeispielen näher erläutert.

Es zeigt
- Fig. 1: eine aseptisch arbeitende FFS-Maschine in Seitenansicht;
- Fig.2: schematisch und in Draufsicht eine mehrbahnig im Einzelreihen-Schrittakt zu fahrende Packstoffbahn;
- Fig.3: schematisch und in Draufsicht eine zweibahnig im mehrreihigen Schrittakt zu fahrende Packstoffbahn;
- Fig.4: schematisch in Draufsicht und anhand einer Einzeltiefziehform eine Banderolenzufuhreinrichtung als Beispiel für eine Dekoreinrichtung;
- Fig.5: schematisch in Gesamtdraufsicht die Banderolenzufuhreinrichtung für ein zweireihiges Formstation-Unterteil und
- Fig.6: schematisch die Phasendarstellung eines Arbeitszyklusses bei Einreihen-Schritttakt.

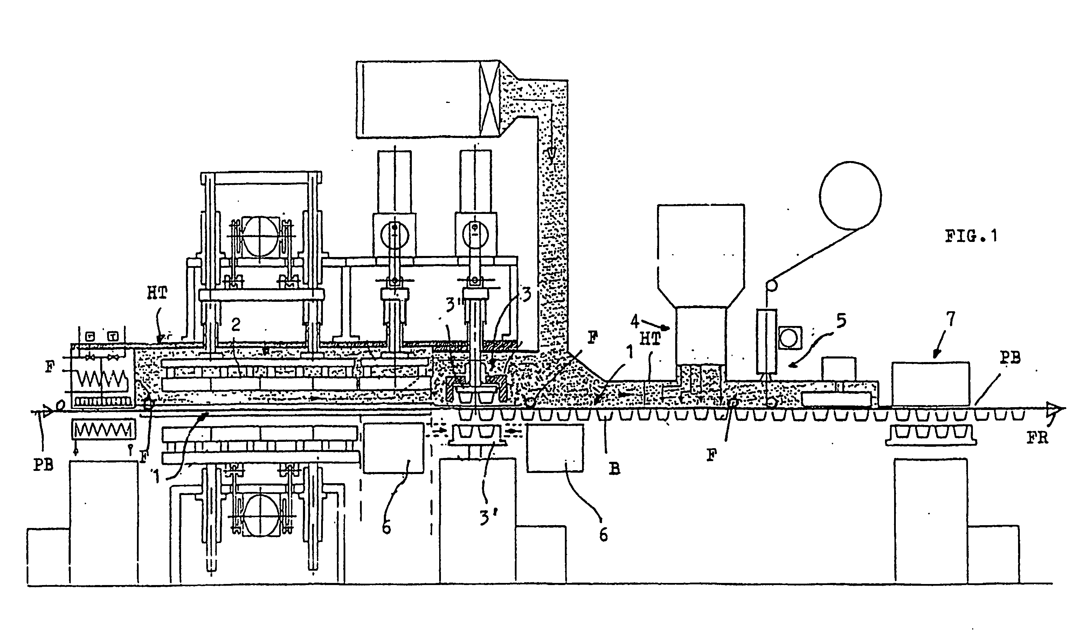

Orientiert an Fig. 1 besteht die FFS-Verpackungsmaschine zur Durchführung des Verfahrens nach wie vor aus einer längs der mit Förderelementen F versehenen Packstoffbahnförderstrecke 1 angeordneten Vorwärm-, Form-, Füll- und Schließstationen 2 bis 5, wobei unterhalb der Förderstrecke 1 beidseitig neben dem gegen diese beweglichen Formstation-Unterteil 3' Dekoreinrichtungen 6 angeordnet sind. Die Stanzstation ist mit 7 bezeichnet.

Bei der in Fig.1 als Beispiel dargestellten FFS-Maschine handelt es sich um eine aseptisch arbeitende Maschine, d.h., die ganze Packstoffbahn- Bearbeitzungs- und -Förderstrecke 1 ist mit einem sogenannten Halbtunnel HT überdeckt, der in bekannter Weise unter Sterilbedingungen gehalten wird. Die Packstoffbahn-Förderelemente F sind nur schematisch angedeutet, mit denen die Packstoffbahn PB im Takt gefördert wird. Die in der Tiefzieh- bzw. Formstation 3 an der Packstofbahn PB, die im übrigen den Halbtunnel HT nach unten abschließt, ausgeformten Becher sind mit B bezeichnet und die Förderrichtung mit FR.

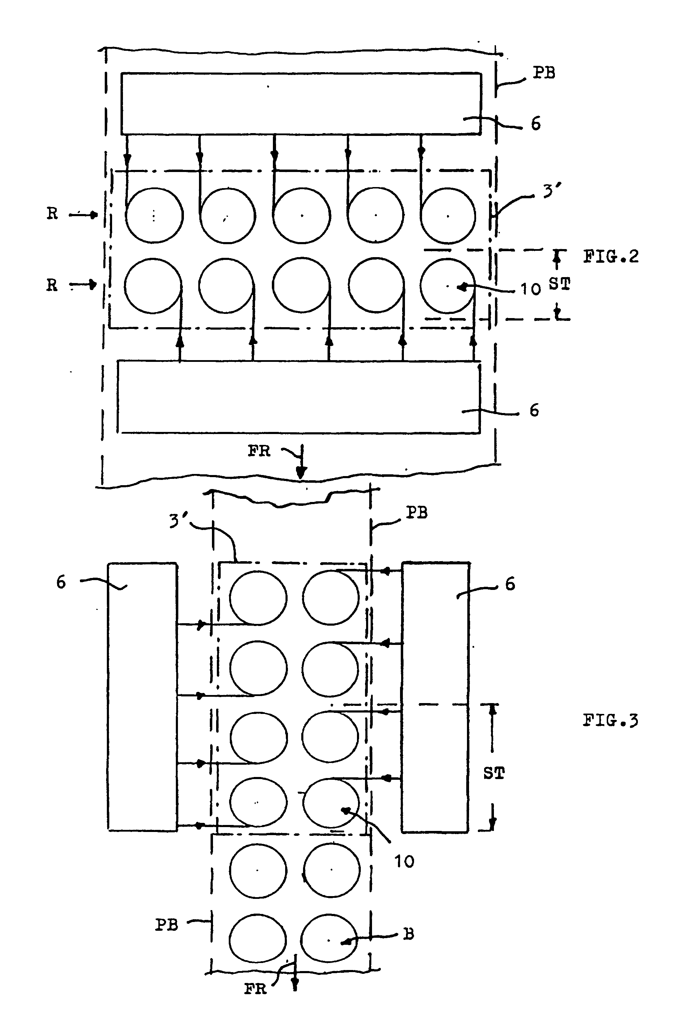

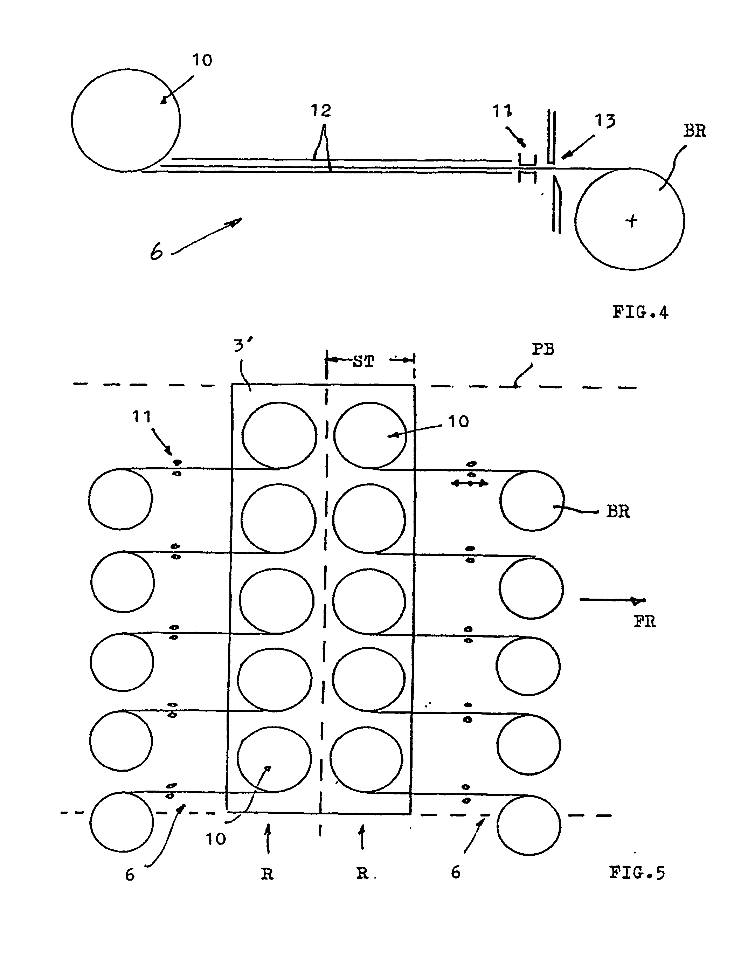

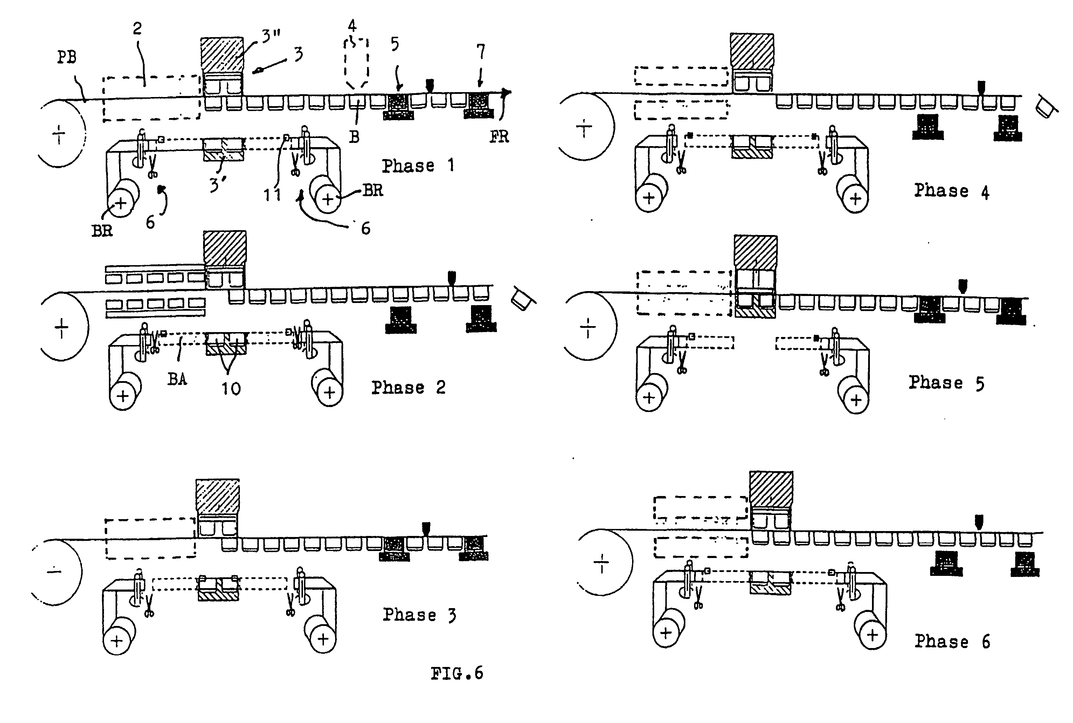

Eine der Banderolier- bzw. Dekoreinrichtungen 6 ist stark schematisiert in Fig.4 nur der Vollständigkeit halber angedeutet, wobei mit BR eine Banderolenvorratsrolle, mit 11 ein längs einer Führung 12 hin und her bewegbarer Greifer und mit 13 eine Schneideinrichtung bezeichnet sind. In Fig.1 sind diese Dekoreinrichtungen vereinfacht nur in Form zweier Blöcke verdeutlicht, die in Bezug auf die Förderrichtung FR vor und hinter dem auf und ab verstellbaren Unterteil 3' der Formstation 3 angeordnet sind (siehe hierzu auch Fig.2),und zwar, wie aus Fig.6 ersichtlich, in Höhe der Tiefstellung des Formstation-Unterteiles 3'.

Für diese FFS-Maschine ist nun zur Durchführung des Verfahrens wesentlich, daß das Formstation-Unterteil 3' mit dem zugehörigen Oberteil 3" bzgl. seiner Becherformen und zugehöriger Tiefziehelemente zweireihig ausgebildet ist (siehe Fig.2 und 5). Außerdem ist der nicht unmittelbar selbst dargestellte Antrieb der Packstoffbahnförderelemente F als Einreihen-Schritttaktantrieb ausgebildet, d.h., weitergerückt wird die Packstoffbahn PB immer nur um die Strecke ST gemäß Fig.5, d.h., im Einreihenschritttakt. Orientiert am Beispiel der Fig.2,5 wird hierbei die Packstoffbahn PB bspw. "fünfbahnig" verarbeitet.

Ferner sind sowohl der Antrieb für das Unterteil 3' der Formstation 3 für dessen Auf-und Abbewegung einschließlich seiner Stillstandszeit für die entsprechend getaktete Banderolenbe - schickung als auch der Antrieb für die Tiefziehelemente 8 des Oberteiles 3" als Zweireihen-Schritttaktantriebe ausgebildet.

Diese spezielle Ausbildung einer FFS-Maschine bildet die Voraussetzung dafür, daß das Verfahren, zunächst kurz zusammengefaßt, wie folgt durchführbar ist, und zwar trotz hoher Einschritttaktzahl wie folgt:
Es werden gleichzeitig zwei Reihen von Bechern B an der Packstoffbahn PB unter Verwendung einer zweireihigen, mit Banderolen bestückten Tiefziehstation 3 eingeformt, d.h., in die in zwei Reihen R (siehe Fig.5) angeordneten Becherausnehmungen 10 des Unterteiles 3' der Formstation 3. Während zweier Einzelreihentaktschritte zur Weiterförderung der Packstoffbahn PB jeweils um die Strecke ST wird das zweireihige Unterteil 3' der Formstation abgesenkt, in beide Reihen R der Becherausnehmungen 10 werden die Banderolenabschnitte eingebracht; wonach die so bestückten Becherausnehmungen 10 des Unterteiles 3' der Tiefziehform wieder gegen die unverformte Packstoffbahn PB gefahren und erneut zwei Becherreihen R ausgeformt werden.

Entscheidend ist also, daß die Weiterförderung der Packstoffbahn aus der Formstation 3 nicht in einem Schritt um die Strecke 2xST erfolgt, sondern in zwei Schritten um jeweils lxST. Orientiert am Beispiel der Fig.2 bzw. 5 ist in diesem Fall die Füllstation 4 mit fünf Füllköpfen (nicht besonders dargestellt) ausgestattet.

Im Einzelnen ist dies einschließlich der Banderolenhandhabung und sonstiger Vorgänge nochmals in Fig.6 ausführlicher dargestellt, wobei in den einzelnen Phasen Folgendes geschieht:
**Phase 1**: Vorwärmstation 2 geschlossen, Schließ- bzw. Siegel station 5 geschlossen, Stanze 7 geschlossen, Banderolen in Bereitstellung, Unterteil 3' der Formstation 3 ist abgesenkt.
**Phase 2:** Vorwärstation 2, Siegel-5 und Stanzstation 7 sind geöffnet, und es erfolgt einreihiger Packstoffbahnabzug um lx ST, die einzubringenden Banderolenabschnitte werden abgeschnitten
**Phase 3**: Vorwärm-, Siegel- und Stanzstationen sind geschlossen, Banderolenabschnitte werden mittels Greifern 11 in die Formausnehmungen 10 des Unterteiles 3' eingeschoben
**Phase 4**: Vorwärm-, Siegel- und Stanzstationen werden geöffnet, und es erfolgt einreihiger Packstoffbahnabzug, die Greifer 11 der Banderoliereinrichtungen 6 gehen in Ausgangsstellung zurück
**Phase 5**: Vorwärmstation geschlossen, Tiefziehwerkzeuge werden unter Ausformung der Becher B an der Packstofbahn PB geschlossen, Banderolen werden in Bereitschaftsstellung geschoben, Siegelwerkzeuge und Stanzen werden geschlossen
**Phase 6**: Unterteil 3' der Formstation fährt nach unten, Siegelwerkzeuge und Stanze öffnen, ebenso Vorwärmung und Formstation.
Danach beginnt neuer Zyklus, wie beschrieben.

Für eine Becherdekoration mit Etiketten ist selbstverständlich, daß statt der in den Phasen 1 bis 6 beschrieben Vorgänge zur Bereitstellung und Einbringung von Banderolen als Ab schnitte von einem fortlaufenden Banderolenband in die Formeintiefungen 10 sinngemäß die entsprechenden Vorgänge zur Bereitstellung und Einbringung von Etiketten ablaufen, die dabei aus einem Etiketten-Magazin abgezogen werden.

Für die Befüllung mit pastöserem, also nicht zum Überschwappen neigenden Füllgut ändert sich in der vorbeschriebenen Phasendarstellung gemäß Fig.6 unter Verweis auf Fig.3 nur insofern etwas, als hierbei die Dekoreinrichtungen 6 beidseitig neben der zweibahnigen Packstoffbahn PB angeordnet sind und die Formstation bspw. vier, sechs oder acht Becherausnehmungen 10 und eine entsprechende Anzahl von Tiefziehoberteilen 3" aufweisen muß. Außerdem sind dann die Antriebe so ausgelegt, daß Zwei-, Drei- oder Vierreihen- Taktschritte vollzogen werden.
Um alle Becher- bzw. Formeintiefungen 10 im Formstation-Unterteil 3' für die Dekoration zugänglich zu halten, ist bei dieser Ausführungsform eine nur "zweibahnige" Verarbeitung der Packstoffbahn PB möglich.

## Patentansprüche

1. Tiefziehverfahren zum getakteten Formen, Füllen und Schließen von dekorierten Bechern (B) einer Packstoffbahn (PB) mit einer FFS-Maschine , wobei als Becherdekor Banderolen oder Etiketten vor dem Formen der Becher (B) in die Formstation-Unterteile (3') der FFS-Maschine eingebracht werden,
wobei für das Füllen der Becher (B) mit leicht überschwappendem Füllgut gleichzeitig zwei Reihen (R) von Bechern (B) an der Packstoffbahn (PB) unter Verwendung einer zweireihigen, mit Banderolen bestückbar ausgebildeten Formstation (3) eingeformt werden,
wobei während zweier Einzelreihentaktschritte das Formstation-Unterteil (3') abgesenkt wird und in beide Formreihen (R) der Formstation (3) die Banderolen oder Etiketten eingebracht werden,
wobei danach das so bestückte Formstation-Unterteile (3') wieder gegen die unverformte Packstoffbahn (PB) gefahren wird und
wobei daß erneut zwei Reihen (R) von Bechern (B) an der Packstoffbahn (PB) ausgeformt werden.

2. Tiefziehverfahren zum getakteten Formen, Füllen und Schließen von dekorierten Bechern (B) einer Packstoffbahn (PB) mit einer FFS-Maschine , wobei als Becherdekor Banderolen oder Etiketten vor dem Formen der Becher (B) in die Formstation-Unterteile (3') der FFS-Maschine eingebracht werden,
wobei für das Füllen der Becher (B) mit nicht schwappenden Füllgut gleichzeitig mehrere, geradzahlige Reihen (R) von Bechern (B) an der Packstoffbahn (PB) unter Verwendung einer entsprechend mehrreihigen, zweibahnigen mit Banderolen bestückbar ausgebildeten Formstation (3) eingeformt werden,
wobei während zweier jeweils die halbe Anzahl der Reihen erfassender Taktschritte das Formstation-Unterteil (3') abgesenkt wird und in beide Formreihen (R) der Formstation (3) die Banderolen oder Etiketten quer zur Förderrichtung der Packstoffbahn (PB) eingebracht werden,
wobei danach das so bestückte Formstation-Unterteile (3') wieder gegen die unverformte Packstoffbahn (PB) gefahren wird und
wobei erneut vier, sechs oder geradzahlig mehr in zwei Bahnen angeordnete Reihen (R) von Bechern (B) an der Packstoffbahn (PB) ausgeformt werden.

3. FFS-Maschine zur Durchführung des Verfahrens nach Anspruch 1, bestehend aus einer längs der mit Förderelementen (F) versehenen Packstoffbahnförderstrecke (1) angeordneten Vorwärm- (2), Form-(3), Füll-(4) und Schließstation (5), wobei dem gegen die Packstoffbahnförderstrecke (1) beweglichen Formstation-Unterteil (3') zwei Banderolier- bzw. Etikettiereinrichtungen (6) zugeordnet sind,
wobei das Formstation-Unterteil (3') mit dem zugehörigen Oberteil (3") bzgl. seiner Becherformen und zugehöriger Tiefziehelement zweireihig ausgebildet ist,
wobei der Antrieb der Packstoffbahnförderelemente (F) als Einreihen-Schrittakt-Antrieb ausgebildet ist, und
wobei sowohl der Antrieb für das Unterteil (3') der Formstation (3) für dessen Auf-und Abbewegung einschließlich seiner Stillstandszeit für die entsprechend getaktete Banderolen- bzw. Etikettenbeschickung als auch der Antrieb für die Tiefziehelemente (8) des Oberteiles (3") sind als Zweireihen-Schritttaktantriebe ausgebildet sind.

4. FFS-Maschine zur Durchführung des Verfahrens nach Anspruch 2, bestehend aus einer längs der mit Förderelementen (F) versehenen Packstoffbahnförderstrecke (1) angeordneten Vorwärm- (2), Form-(3), Füll-(4) und Schließstation (5), wobei dem gegen die Packstoffbahnförderstrecke (1) beweglichen Formstation-Unterteil (3') Banderolier- bzw. Etikettiereinrichtungen (6) zugeordnet sind,
wobei das Formstation-Unterteil (3') mit dem zugehörigen Oberteil (3") ist bzgl. seiner Becherformen und zugehöriger Tiefziehelemente zweibahnig und geradzahlig mehr als zweireihig ausgebildet ist,
wobei der Antrieb der Packstoffbahnförderelemente (F) als geradzahlig mehr als Zweireihen-Schrittakt-Antrieb ausgebildet ist, und wobei sowohl der Antrieb für das Unterteil (3') der Formstation (3) für dessen Auf-und Abbewegung einschließlich seiner Stillstandszeit für die entsprechend getaktete Banderolen- bzw. Etikettenbeschickung als auch der Antrieb für die Tiefziehelemente (8) des Oberteiles (3") sind als geradzahlig mehr als Zweireihen-Schrittaktantriebe ausgebildet sind.

## Claims

1. A deep drawing method for time-controlled forming, filling and closing of decorated cups (B) from a continuous length of packaging material (PB) with an FFS machine, in which decorative strips or labels are fed as cup decoration into the forming station lower parts (3') of section of the FFS machine before the cups (B) are formed,
wherein in order to fill cups (B) with contents susceptible to spilling, two rows (R) of cups (B) are moulded in packaging material (PB) using a double-row forming station (3) that can be configured to accommodate decorative strips,
wherein the forming station lower part (3') is lowered over the course of two single row timing steps and the decorative strips or labels are fed into both forming rows (R) of forming station (3),
wherein the forming station lower part (3') thus furnished is then returned against unformed packaging material (PB) and
wherein two more rows (R) of cups (B) are formed in the packaging material (PB).

2. The deep drawing method for time-controlled forming, filling and closing of decorated cups (B) from a continuous length of packaging material (PB) with an FFS machine, in which decorative strips or labels are fed as cup decoration into the forming station lower parts (3') of section of the FFS machine before the cups (B) are formed,
wherein in order to fill cups (B) with contents not susceptible to spilling, multiple, even-numbered rows (R) of cups (B) are moulded in packaging material (PB) using a forming station (3) that can be configured to accommodate decorative strips for a dual material length having a corresponding number of multiple rows,
wherein the forming station lower part (3') is lowered over the course of two timing steps each corresponding to half the number of rows and the decorative strips or labels are fed into both forming rows (R) of forming station (3) perpendicularly to the direction of transport of packaging material (PB),
wherein the forming station lower part (3') thus furnished is then returned against unformed packaging material (PB) and
wherein four, six, or any even number of new rows (R) of cups (B) are formed in two lengths of the packaging material (PB).

3. An FFS machine for performing the method according to claim 1, including a preheating (2), forming (3), filling (4) and closing station (5) arranged along a packaging material strip conveyor line (1) that is furnished with conveyor elements (F), two decorative strip or labelling mechanisms (6) being assigned to the forming station lower part (3'), which is movable against the packaging material conveyor line (1),
wherein the forming station lower part (3') is configured in two rows with the associated upper part (3") with respect to its cup shapes and associated deep drawing elements,
wherein the drive unit for packaging material conveyor elements (F) is configured as a single row stepping cycle drive unit, and
wherein both the drive unit for the lower part (3') of forming station 3, causing the upward and downward movement and the idle time thereof for the correspondingly timed introduction of the decorative strip or label, and the drive unit for deep drawing elements (8) of upper part (3") are configured as dual row stepping cycle drive units.

4. The FFS machine for performing the method according to claim 2, including a preheating (2), forming (3), filling (4) and closing station (5) arranged along a packaging material strip conveyor line (1) that is furnished with conveyor elements (F), two decorative strip or labelling mechanisms (6) being assigned to the forming station lower part (3'), which is movable against the packaging material conveyor line (1),
wherein the forming station lower part (3') is configured in a an even number of rows greater than two and for two lengths of packaging material with the associated upper part (3") with respect to its cup shapes and associated deep drawing elements,
wherein the drive unit for packaging material conveyor elements (F) is configured as a double row stepping cycle drive unit for an even number greater than 2, and
wherein both the drive unit for the lower part (3') of forming station 3, causing the upward and downward movement and the idle time thereof for the correspondingly timed introduction of the decorative strip or label, and the drive unit for deep drawing elements (8) of upper part (3") are configured as dual row stepping cycle drive units for even numbers greater than two.

## Revendications

1. Procédé d'emboutissage pour le formage, le remplissage et la fermeture cadencés de gobelets décorés (B) dans une bande de matériau d'emballage (PB) à l'aide d'une machine FRF, des banderoles ou étiquettes étant introduites, avant le formage des gobelets (B), dans les parties inférieures de la station de formage (3') de la machine FRF pour servir de décor pour les gobelets,
pour le remplissage des gobelets (B) avec un produit de remplissage débordant facilement, simultanément deux rangées (R) de gobelets (B) étant façonnées dans la bande de matériau d'emballage (PB) en utilisant une station de formage (3) réalisée sur deux rangées et pouvant être chargée de banderoles,
la partie inférieure de la station de formage (3') étant descendue pendant deux pas d'impulsion sur une rangée et les banderoles ou étiquettes étant introduites dans les deux rangées de formage (R) de la station de formage (3),
la partie inférieure de la station de formage (3') ainsi chargée étant ensuite ramenée contre la bande de matériau d'emballage (PB) non formée et
à nouveau deux rangées (R) de gobelets (B) étant façonnées dans la bande de matériau d'emballage (PB).

2. Procédé d'emboutissage pour le formage, le remplissage et la fermeture cadencés de gobelets décorés (B) dans une bande de matériau d'emballage (PB) à l'aide d'une machine FRF, des banderoles ou étiquettes étant introduites, avant le formage des gobelets (B), dans les parties inférieures de la station de formage (3') de la machine FRF,
pour le remplissage des gobelets (B) avec un produit de remplissage ne débordant pas, simultanément plusieurs rangées (R) en nombre pair de gobelets (B) étant façonnées dans la bande de matériau d'emballage (PB) en utilisant une station de formage (3) réalisée en conséquence en plusieurs rangées, en deux bandes et pouvant être chargée de banderoles,
la partie inférieure de la station de formage (3') étant descendue pendant deux des pas d'impulsion touchant respectivement la moitié des rangées et les banderoles ou étiquettes étant introduites transversalement par rapport au sens de convoyage de la bande de matériau d'emballage (PB) dans les deux rangées de formage (R) de la station de formage (3),
la partie inférieure de la station de formage (3') ainsi chargée étant ensuite ramenée contre la bande de matériau d'emballage (PB) non formée
et de nouveau quatre, six ou plus en nombre pair de rangées (R) de gobelets (B) disposées en deux bandes étant façonnées dans la bande de matériau d'emballage (PB).

3. Machine FRF pour la réalisation du procédé selon la revendication 1, consistant en une station de préchauffage (2), de formage (3), de remplissage (4) et de fermeture (5) disposée le long du segment de convoyage de bande de matériau d'emballage (1) pourvu d'éléments de convoyage (F), étant associés à la partie inférieure de la station de formage (3') mobile vers le segment de convoyage de bande de matériau d'emballage (1) deux dispositifs de pose de banderoles ou d'étiquettes (6),
la partie inférieure de la station de formage (3') étant, avec la partie supérieure correspondante (3''), au niveau de ses formes de gobelets et des éléments d'emboutissage correspondants, réalisée en deux rangées,
la propulsion des éléments de convoyage de la bande de matériau d'emballage (F) se présentant sous forme d'une propulsion à impulsions à pas sur une rangée et
aussi bien la propulsion de la partie inférieure (3') de la station de formage (3) servant à la monter et à la descendre, y compris son temps d'immobilisation pour le chargement cadencé en conséquence des banderoles ou des étiquettes, que la propulsion des éléments d'emboutissage (8) de la partie supérieure (3'') se présentant sous forme de propulsions à impulsions à pas sur deux rangées.

4. Machine FRF pour la réalisation du procédé selon la revendication 2, consistant en stations de préchauffage (2), de formage (3), de remplissage (4) et de fermeture (5) disposées le long du segment de convoyage de bande de matériau d'emballage (1) pourvu d'éléments de convoyage (F), étant associés à la partie inférieure de la station de formage (3') mobile vers le segment de convoyage de bande de matériau d'emballage (1) des dispositifs de pose de banderoles ou d'étiquettes (6),
la partie inférieure de la station de formage (3') étant, avec la partie supérieure correspondante (3''), réalisée, au niveau de ses formes de gobelets et des éléments d'emboutissage correspondants, en deux bandes et sur plus de deux rangées en nombre pair
la propulsion des éléments de convoyage de la bande de matériau d'emballage (F) étant réalisée sous forme d'une propulsion à impulsions à pas sur plus de deux rangées en nombre pair et
aussi bien la propulsion de la partie inférieure (3') de la station de formage (3) servant à la monter et à la descendre, y compris son temps d'immobilisation pour le chargement cadencé en conséquence des banderoles ou des étiquettes, que la propulsion des éléments d'emboutissage (8) de la partie supérieure (3'') se présentant sous forme de propulsions à impulsions à pas sur plus de deux rangées en nombre pair.
